# EUROPÄISCHE PATENTSCHRIFT

(11) **EP 0 663 939 B1**
(45) Veröffentlichungstag und Bekanntmachung des Hinweises auf die Patenterteilung: **16.04.1997**
(21) Anmeldenummer: 93920672.8
(22) Anmeldetag: 29.09.1993
(51) Int. Cl.: C09D 17/00, B05D 7/24

(54) **VERFAHREN ZUR HERSTELLUNG EINES AUFTRAGS VON EDELSTEIN LAPISLAZULI AUF EINEN TRÄGER, MISCHUNG DAFÜR UND DERGESTALT HERGESTELLTER TRÄGER**
PROCESS AND MIXTURE FOR APPLYING A COATING MADE OF THE PRECIOUS STONE LAPIS LAZULI ON A SUBSTRATE, AND SUBSTRATE THUS PRODUCED
PROCEDE ET MELANGE D'APPLICATION D'UN REVETEMENT CONSTITUE DE LA PIERRE PRECIEUSE LAPIS-LAZULI SUR UN SUBSTRAT, ET SUBSTRAT AINSI PRODUIT

(30) Priorität: 29.09.1992 DE 4232583; 09.10.1992 DE 4234020
(43) Veröffentlichungstag der Anmeldung: 26.07.1995
(73) Patentinhaber: MACK, Peter, D-69151 Neckargemünd (DE)
(72) Erfinder: MACK, Peter, D-69151 Neckargemünd (DE)
(74) Vertreter: Mierswa, Klaus, Dipl.-Ing.
(86) Internationale Anmeldenummer: DE9300922
(87) Internationale Veröffentlichungsnummer: WO9407963

(56) Entgegenhaltungen:
- FR-A- 1 539 718
- US-A- 3 251 704

## Beschreibung

### Technisches Gebiet:

Die Erfindung betrifft ein Verfahren zur Herstellung eines Auftrags aus dem Edelstein Lapislazuli und zum Aufbringen eines derartigen Auftrags auf einen Träger sowie derartiger Auftrag und dergestalt hergestellter Träger.

### Stand der Technik:

Bisher war es praktisch nicht möglich, Arbeiten, wie Lackier- oder Einlegearbeiten, mit Lapislazuli auszuführen. Die für Einlegearbeiten erforderlichen dünnen Schnitte aus Lapislazulistein sind zu brüchig, um Formen ausschneiden und verarbeiten zu können.

Lapislazuli ist ein Aluminium-Silikat, in dessen Atomgitter Schwefelatome enthalten sind, die dem Edelstein seine charakteristische Blaufärbung geben. Lapislazuli besteht aus ca. 6 verschiedenen Mineralien, u.a. Pyrith, die nach dem Mahlen getrennt werden müssen, um das blaue Pigment herauszuholen. Das Herausholen des Pigmentes aus dem gemahlenen, kristallinen Edelstein wird durch ein modernes Aufbereitungsverfahren gewonnen, welches Ausbeuten der verschiedenen Farbtöne zwischen 3 bis 10 % Pigment unterschiedlicher Blautöne aus dem Edelstein ergibt, so daß nach dem Trennvorgang Lapislazuli-Edelsteinpigmente in kristalliner Form getrennt nach unterschiedlichen Blautönen von hell bis dunkelblau zur Verfügung stehen.

Die Verwendung von größeren Mengen Lapislazuli-Edelsteinpigment war bis heute nicht möglich, weil die alten Techniken nur eine höchst geringe Ausbeute ergaben. Das Lapislazuli-Edelsteinpigment ist aber für Restaurationen, insbesondere für Werke aus dem Orient, Buchillustrationen oder besonders wertvolle Veredelungen oder künstlerische Gestaltungen von Gegenständen, wie Einlegearbeiten, praktisch unersetzlich.

Durch die FR-A-1 539 718 ist ein Verfahren zur Herstellung eines pastösen, modellierfähigen Überzuges von Gebäuden oder zur Herstellung von architektonischen Motiven oder Friesen auf der Basis von flüssigen, transparenten Harzen mit mineralischen Substanzen bekannt geworden, die ungefähr zu 70% dem Harz zugemischt sind. Die mineralischen Substanzen bestehen spezifisch aus pulverisierter vulkanischer Lava, Silizium, Zement, Kohle, Glimmer, ebenso wie aus Perlmuttpuder und phosphoreszierenden und fluoreszierenden Substanzen, denen auch mineralische Farbpigmente zugemischt sein können. Die Verwendung derartiger pastöser Massen dient dazu, Marmor oder sonstige Maserungen zu imitieren.

Durch die US-A-3 251 704 ist die Herstellung einer Masse eines farbähnlichen, reflektierenden Überzugs bekannt geworden, der nach dem Trocknen als reflektierende Oberflächenschicht vorliegt, bestehend aus einer Mischung aus einem transparenten Lack, der nichtflüchtige, filmbildende Bindermaterialien, halbrunde reflektierende Mikrokugeln aus transparentem Glas und nichtmetallische, chemisch inerte, farbige Pigmentpartikel in Form von organischen Molekülkomplexen (Clusters) von Pigmentpulver mit einer Größenverteilung zwischen 2 bis 70 Micron enthält Diese Überzugmasse dient zur Beschichtung von sphärischen Linsen oder Gläsern, um farbliche Effekte, insbesondere reflektierende Effekte der Linsen oder Gläser zu erzeugen.

### Technische Aufgabe:

Der Erfindung liegt die Aufgabe zugrunde, den Edelstein Lapislazuli in kristalliner Form als gemahlenes Gestein in vielfältiger Weise auf praktisch beliebigen Trägern zur Veredelung von deren Oberfläche einzusetzen.

### Offenbarung der Erfindung und deren Vorteile:

Die Lösung der Aufgabe besteht darin, daß kristallines Lapislazuli-Edelsteinpigment, das eine Korngröße zwischen 5 und 90 Mikrometer (Micron) aufweist, verwendet und mit einem farblosen Bindemittel - nämlich selbsthärtendes oder reaktionshärtendes Lacksystem, insbesondere Polyester-, Polyurethan- oder Acryllack oder Autolack in Ein- oder Zweischichtlackierung, gegebenenfalls gemischt mit weiteren farblosen Lacken - gemischt wird und diese Mischung auf den Träger aufgebracht sowie gegebenenfalls nach dem Trocknen bzw. Aushärten auf dem Träger geschliffen bzw. poliert wird; anschließend kann der Auftrag mit einem farblosen Decklack überzogen werden. Der Träger wird vorzugsweise vor dem Aufbringen der Mischung aufgerauht oder angeschliffen und die Mischung aufgespritzt oder auflackiert. Vorzugsweise wird der Träger zuvor mit einem Einbrennlack überzogen und derselbe dauerfest aufgebracht, vorzugsweise eingebrannt, und erst danach die Mischung auf den Träger aufgebracht.

In besonders vorteilhafter Ausgestaltung der Erfindung wird kristallines Lapislazuli-Pigment der Korngröße von 20-60 Mikrometer, vorzugsweise 20-40 Mikrometer, mit 1 bis 6 Gewichts-% kristallinem Pyrith der Korngröße 30-150 Mikrometer, vorzugsweise 60-90 Mikrometer, gemischt. Der vorher bei der Herstellung des reinen Lapislazuli-Edelsteinpigments entzogene Pyrith wird somit anschließend wieder zugesetzt, um die intensiven Blaufärbung und das Glitzern der Blaufärbung mehr oder weniger zu verstärken. Diese Mischung aus Lapislazuli-Pigment mit Pyrith wird nun mit einem farblosen Bindemittel gemischt. Statt Pyrith kann ein pulverisiertes Material verwendet werden, welches Pyrith zu ersetzen imstande ist, wie z.B. Goldflitter, Goldpulver, Messing- oder Bronzepulver, Aluminiumdioxydpulver, wobei dieses Material eine Korngröße von 10 bis 100 Mikrometer, vorzugsweise 60-90 Mikrometer, aufweist. Dazu werden je 100 Gramm eines farblosen Bindemittels mit je 25 bis 80 Gramm, vorzugsweise je 55 Gramm, kristallinem Lapislazuli-Edelsteinpigment und mit je 1 bis 6 Gramm Pyrith, vorzugsweise 1-3 Gramm, vermischt.

Das farblose Bindemittel zur Herstellung der Mischung ist vorzugsweise ein selbsthärtendes oder reaktionshärtendes Lacksystem, insbesondere Polyester-, Polyurethan- oder Acryllack oder Autolack in Ein- oder Zweischichtlackierung, das gegebenenfalls mit weiteren farblosen Lacken gemischt ist.

Eine gebrauchsfertige, erfindungsgemäße Mischung zum Lackieren oder Spritzen auf einen Träger besteht aus je 100 Gramm eines farblosen Bindemittels mit je 25 bis 80 Gramm, vorzugsweise je 55 Gramm, kristallinem Lapislazuli-Edelsteinpigment der Korngröße von 20-60 Mikrometer, vorzugsweise 20-40 Mikrometer, mit 1 bis 6 Gewichts-% kristallinem Pyrith, vorzugsweise 1 bis 3 Gewichts-%, insbesondere 2-3 Gewichts-%, der Korngröße 30-150 Mikrometer, vorzugsweise 60-90 Mikrometer.

Der Vorteil der Erfindung besteht darin, daß Lapislazuli-Edelsteinpigmente in kristalliner Form mit unterschiedlichen Blautönen, bestehend aus kristallinen Lapislazuli-Edelsteinpigmenten unterschiedlicher Blautönung, vorzugsweise mit Pyrith, und einem farblosen Bindemittel, auf eine Vielzahl von Trägern als dünner Auftrag aufgebracht, vorzugsweise gespritzt oder lackiert, werden kann. Die Mischung kann nach dem Aufbringen auf den Träger und nach dem Trocknen bzw. Aushärten gegebenenfalls geschliffen und/oder poliert werden, so daß die charakteristische tiefe Blaufärbung entsteht. Diese gegebenenfalls geschliffene und polierte Oberfläche der Mischung kann anschließend mittels eines farblosen Decklacks gestrichen und somit geschützt und insbesondere die Oberfläche gehärtet werden, wobei der Decklack in bekannter Weise aus einem farblosen Polyester- oder Polyuretan- oder Acryl-Lack bestehen kann.

Der optische Eindruck in Form einer tiefen intensiven Blaufärbung entsteht dadurch, daß der natürliche Lapislazuli große, glatte Kristallflächen hat, die das Licht stärker reflektieren als kleine und unebene Flächen, und die Kristalle durchscheinend sind und damit der durchgehende Lichtanteil an den darunterliegenden Kristallen reflektiert wird, wobei dieser Effekt durch den beigemischen Pyrith zu einem Glitzereffekt verstärkt wird.

Zur Herstellung des Auftrags wird das Lapislazuli-Edelsteinpigment mit Pyrith und einem farblosen Bindemittel gemischt, welches vorzugsweise ein Polyester- oder Polyuretan- oder Acryl-Lack ist, der gegebenenfalls mit weiteren farblosen Lacken gemischt sein kann. Auf diese Weise entsteht eine Mischung, die in geeigneter Verdünnung auf praktisch beliebige Träger oder Untergründe aufgebracht, insbesondere aufgespritzt, werden kann, so daß diese Mischung nach dem Trocknen bzw. Aushärten in beschriebener Weise weiterbearbeitet. beispielsweise geschliffen und lackiert, werden kann. Ein derart mit Lapislazuli-Edelsteinpigment beschichteter Träger kann mit weiteren, edlen Materialien kombiniert werden, wie beispielsweise Marmor, Fliesen oder Edelhölzern, auf die ein gewünschtes Muster des Trägers aufgeklebt bzw. aufgebracht wird. Zur Erhöhung der intensiven optischen Wirkung kann der Träger in sich blau voreingefärbt sein.

Von Vorteil ist die Tatsache, daß die Mischung sich auf Folien, zum Beispiel eine dünne Polyester-Folie, aufbringen, insbesondere spritzen, läßt, die vorher angeschliffen oder angerauht werden kann. Nach dem Trocknen der aufgebrachten Mischung kann die gewünschte Form aus der Folie ausgeschnitten oder ausgestanzt werden, wonach die Folie mittels eines Klebers auf einen weiteren Untergrund aufgeklebt werden kann. Nunmehr wird der Auftrag auf der Folie geschliffen bzw. poliert und mit einem farblosen Lack überlackiert.

Ein weiterer Vorteil der Mischung besteht darin, daß das LapislazuliEdelstein-Pigment wie auch der Pyrith jederzeit aus dem Verbund in der Mischung oder auch auf einem Träger bzw. einem Untergrund wiedergewonnen werden kann, ohne daß das Edelstein-Pigment dabei zerstört oder seine Farbe ändern würde. Innerhalb der Mischung ist das Lapislazuli-Edelsteinpigment als Kristalle in kleiner und kleinster Korngröße zwischen 5 und 90 Micron, vorzugsweise 20-40 Mikrometer, enthalten. Dazu wird das Lapislazuli-Edelsteinpigment aus dem Auftrag oder aus der Mischung dergestalt zurückgewonnen, daß der Träger oder der Untergrund durch Abschmelzen, Verbrennen oder chemischer Auflösung des Bindemittels der Mischung oder in sonstiger Weise durch Auflösen des Bindemittels aufgelöst wird, so daß das Lapislazuli-Edelsteinpigment sowie der Pyrith aus dem Bindemittel vollständig wieder zurückgewonnen wird.

### Kurzbeschreibung der Zeichnung, in der zeigen:

- Figur 1: eine Folie, die mit einer Mischung aus Lapislazuli-Edelsteinpigment und Bindemittel beschichtet ist und aus der eine programmierbare Plotter-Schneidmaschine ein Muster ausschneidet
- Figur 2: das aus der Folie herausgenommene Folienmuster
- Figur 3: das auf eine Tischfläche als Untergrund aufgebrachte Folienmuster
- Figur 4: einen vergrößerten schematischen Querschnitt durch einen mit der Mischung beschichteten Träger und
- Figur 5: einen vergrößerten schematischen Querschnitt durch die Mischung.

### Bevorzugte Ausführungsformen der Erfindung:

Eine Folie 1 ist mittels eines Auftrags beschichtet, der aus einer Mischung aus Lapislazuli-Edelsteinpigment und einem farblosen Bindemittel besteht, wobei die Folie 1 vor dem Auftrag angeraut oder angeschliffen wird. Nach dem Trocknen bzw. Aushärten des Auftrags kann aus der Folie 1 ein Muster 3 gestanzt oder geschnitten werden, was mittels einer programmierbaren Plotter-Schneidmaschine geschehen kann. Nach dem Herauslösen des Musters 3 wird dasselbe z. B. auf einen weiteren Untergrund 4, der ein Tisch sein kann, mittels eines geigneten Klebers aufgeklebt. Danach wird der Auftrag des Folienmusters 3 auf dem Untergrund 4 geschliffen und gegebenenfalls poliert, so daß die blaue Färbung des Lapislazuli-Edelsteinpigmentes voll zur Geltung kommt. Anschlies-send wird die Oberfläche des Folienmusters 3 bzw. des Auftrags auf dem Untergrund 4 mit einem farblosen Decklack überzogen, der z. B. ein Polyester-, Polyurethan- oder Acryllack ist und der insbesondere eine hohe Oberflächenhärte und Abriebfestigkeit besitzt, um den Auftrag zu schützen. Oder die beschichtete Folie 1 wird geschliffen und poliert und danach mit einem Klarlack überzogen. Nach dem Trocknen bzw. Aushärten des Klarlacks wird aus der Folie 1 das Muster 3 ausgeschnitten oder ausgestanzt und auf den Untergrund aufgeklebt bzw. in eine entsprechende Aussparung eingeklebt. Auf diese Weise lassen sich praktisch beliebige Folienmuster erstellen und zur besonderen Dekoration oder Veredelung auf einer Vielzahl von Untergründen verwenden.

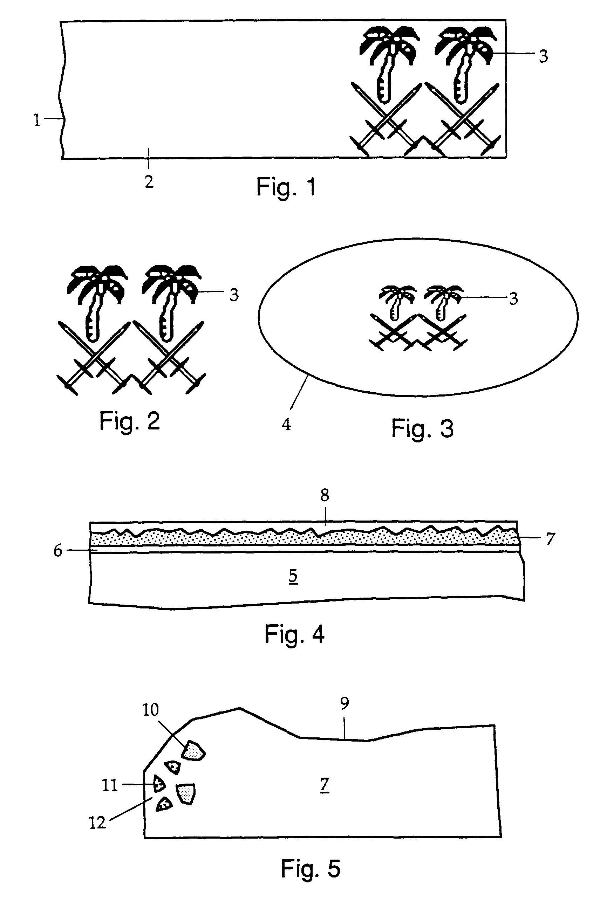

Figur 4 zeigt in allgemeiner Anwendung einen vergrößerten Querschnitt durch einen Träger 5. Dieser ist zuerst mit einem Lack 6 beschichtet worden, der dauerhaft auf dem Träger 5 angeordnet ist; vorzugsweise ist der Lack ein transparenter Einbrennlack 6 und auf dem Träger 5 eingebrannt. Der fertige Einbrennlack 6 verhindert, daß beim nachfolgenden Aufbringen der Mischung 7 keine Entmischung stattfindet und daß insbesondere keine Lackteilchen des Einbrennlackes 6 oder der Oberfläche des Trägers 5 oder eine Farbgebung derselben in die frisch aufgebrachte Mischung 7 diffundieren können. Auf diese Lackschicht 6 ist eine Mischung 7 aus kristallinem Lapislazuli-Pigment 11 mit Pyrith 10 innerhalb eines Bindemittels 12 aufgebracht. Das Lapislazuli-Pigment 11 besitzt eine Korngröße von 20-60 Mikrometer, vorzugsweise 20-40 Mikrometer, der Pyrith 10 eine solche von 30-150 Mikrometer, vorzugsweise 60-90 Mikrometer, so daß das Korn des Pyriths normalerweise größer ist.

Wenn diese Mischung 7 getrocknet bzw. ausgehärtet ist, kann dieselbe etwas angeschliffen oder anpoliert werden. Anschließend wird ein Decklack 8 aufgebracht, der die geringfügigen Unebenheiten der Körnung der Lapislazuli-Pigmente und der des Pyriths auszugleichen imstande ist und der seinerseits nach dem Trocknen bzw. Aushärten geschliffen bzw. poliert werden kann.

Ein Beispiel der Mischung wird wie folgt hergestellt: Zu einer Einheit Lapislazuli-Pigment 11 mit einer Korngröße von 20-60 Mikrometer, vorzugsweise 20-40 Mikrometer, werden 1 bis 6 Gewichtsprozent, vorzugsweise 1 bis 3 Gewichtsprozent, insbesondere 2-3 Gewichtsprozent, Pyrith der Korngröße 30-150 Mikrometer, vorzugsweise 60-90 Mikrometer, oder ein Pyrith ersetzendes Material, wie Goldflitter, Goldpulver, Messing- oder Bronzepulver, Aluminiumdioxydpulver, wobei das Material eine Korngröße von 10 bis 100 Mikrometer, vorzugsweise 60-90 Mikrometer, aufweist, hinzugefügt; es entsteht ein Gemisch von Lapislazuli-Pigment und Pyrith oder ein Pyrith ersetzendes Material. Je 100 Gramm eines flüssigen Bindemittels, zum Beispiel ein selbsthärtendes oder reaktionshärtendes Lack-system, insbesondere Polyester-, Polyurethan- oder Acryllack oder Autolack in Ein- oder Zweischichtlackierung, werden nun zwischen 25 bis 80 Gramm, vorzugsweise 55 Gramm, des Gemisches zugegeben, so daß in der fertigen, gebrauchsfähigen Mischung cirka 0,5 bis 3 Gewichtsprozent, vorzugsweise 2 bis 3 Gewichtsprozent, Pyrith oder ein Pyrith ersetzendes Material enthalten ist.

Figur 5 zeigt in vergrößerter Darstellung einen schematischen Schnitt durch eine Mischung 7 zur Darstellung, daß die einzelnen Lapislazuli-Edelsteinpigmente 11 kleiner als die Pyrithteilchen 10 sind, die in der Masse des Bindemittels 12 eingebettet sind. Ebenso zeigt Figur 5, daß die Oberfläche 9 der Mischung aufgrund der Körnung der Pigmente einen unregelmäßigen Verlauf aufweist, der mit einem Decklack 8 geglättet und gehärtet wird.

### Gewerbliche Anwendbarkeit:

Das Verfahren eignet sich hervorragend dazu, eine Mischung mit kristallinem Lapislazuli-Edelsteinpigment herzustellen, mit der eine Vielzahl von Materialien beschichtet werden können, wie Füllfederhalter, Dekorgegenstände, Gläser und vieles mehr, deren Oberflächen eine intensive, leuchtende Blaufärbung mit einem mehr oder weniger ausgeprägten Glitzereffekt, beispielsweise von Pyrith, Gold, Messing oder Bronze oder Eloxal (Aluminiumdioxyd) erteilt werden soll.

## Patentansprüche

1. Verfahren zur Herstellung eines Auftrags mittels einer Mischung (7) aus dem Edelstein Lapislazuli auf einen Träger (1,4,5),
dadurch gekennzeichnet,
daß kristallines Lapislazuli-Edelsteinpigment (11), das eine Korngröße zwischen 5 und 90 Mikrometer (Micron) aufweist, verwendet und mit einem farblosen Bindemittel (12) - nämlich selbsthärtendes oder reaktionshärtendes Lacksystem, insbesondere Polyester-, Polyurethan- oder Acryllack oder Autolack in Ein- oder Zweischichtlackierung, gegebenenfalls gemischt mit weiteren farblosen Lacken - gemischt wird und diese Mischung (7) auf den Träger (1,4,5) aufgebracht sowie gegebenenfalls nach dem Trocknen bzw. Aushärten auf dem Träger (1,4,5) geschliffen bzw. poliert wird.

2. Verfahren nach Anspruch 1, dadurch gekennzeichnet,
daß die auf den Träger (1,4,5) aufgebrachte Mischung (7) nach dem Trocknen bzw. Aushärten geschliffen bzw. poliert und mit einem farblosen Decklack (8) überzogen wird.

3. Verfahren nach Anspruch 1, dadurch gekennzeichnet,
daß der Träger (1,4,5) vor dem Aufbringen der Mischung (7) aufgerauht oder angeschliffen und die Mischung (7) aufgespritzt oder auflackiert wird.

4. Verfahren nach Anspruch 1 oder 2, dadurch gekennzeichnet,
daß der Träger (5) mit einem Einbrennlack (6) überzogen und derselbe dauerfest aufgebracht, vorzugsweise eingebrannt, wird und erst danach die Mischung (7) auf den Träger (5) aufgebracht, vorzugsweise aufgespritzt oder auflackiert, wird.

5. Verfahren zur Herstellung einer Mischung (7) aus dem Edelstein Lapislazuli,
dadurch gekennzeichnet,
daß kristallines Lapislazuli-Pigment (11), das eine Korngröße von 20-60 Mikrometer, vorzugsweise 20-40 Mikrometer aufweist, mit 1 bis 6 Gewichts-% kristallinem Pyrith (10) der Korngröße 30-150 Mikrometer, vorzugsweise 60-90 Mikrometer, sowie einem farblosen Bindemittel (12) - nämlich selbsthärtendes oder reaktionshärtendes Lacksystem, insbesondere Polyester-, Polyurethan- oder Acryllack oder Autolack in Ein- oder Zweischichtlackierung, gegebenen-falls gemischt mit weiteren farblosen Lacken - gemischt wird.

6. Verfahren nach Anspruch 5, dadurch gekennzeichnet,
daß die Mischung (7) aus kristallinem Lapislazuli-Pigment (11), die eine Korngröße von 20-60 Mikrometer, vorzugsweise 20-40 Mikrometer aufweist, mit 1 bis 6 Gewichts-% kristallinem Pyrith (10) der Korngröße 30-150 Mikrometer, vorzugsweise 60-90 Mikrometer, mit einem farblosen Bindemittel (12) - nämlich selbsthärtendes oder reaktionshärtendes Lacksystem, insbesondere Polyester-, Polyurethan- oder Acryllack oder Autolack in Ein- oder Zweischichtlackierung, gegebenenfalls gemischt mit weiteren farblosen Lacken - vermischt wird.

7. Verfahren nach Anspruch 5 oder 6, dadurch gekennzeichnet,
daß statt Pyrith ein pulverisiertes Material verwendet wird, welches Pyrith zu ersetzen imstande ist, nämlich Goldflitter, Goldpulver, Messing- oder Bronzepulver, Aluminiumdioxydpulver, wobei das Material eine Korngröße von 10 bis 100 Mikrometer, vorzugsweise 60-90 Mikrometer, aufweist.

8. Verfahren nach Anspruch 6, dadurch gekennzeichnet,
daß je 100 Gramm eines farblosen Bindemittels (12) mit je 25 bis 80 Gramm, vorzugsweise je 55 Gramm, kristallinem Lapislazuli-Edelsteinpigment und mit je 1 bis 6 Gramm Pyrith, vorzugsweise 1-3 Gramm, insbesondere 2-3 Gramm, vermischt werden.

9. Verfahren nach Anspruch 6, dadurch gekennzeichnet,
daß je 100 Gramm eines farblosen Bindemittels (12) mit je 25 bis 80 Gramm, vorzugsweise je 55 Gramm, kristallinem Lapislazuli-Edelsteinpigment und mit je 1-6 Gramm eines pulverisierten Materials vermischt werden, vorzugsweise 1-3 Gramm, insbesondere 2-3 Gramm, welches Pyrith zu ersetzen imstande ist, wie Goldflitter, Goldpuder, Messing- oder Bronzepulver, Aluminiumdioxydpulver.

10. Mischung (7) aus dem Edelstein Lapislazuli zum Aufbringen auf einen Träger (1,4,5), dadurch gekennzeichnet,
daß dieselbe aus je 100 Gramm eines farblosen Bindemittels (12) - nämlich selbsthärtendes oder reaktionshärtendes Lacksystem, insbesondere Polyester-, Polyurethan- oder Acryllack oder Autolack in Ein- oder Zweischichtlackierung, gegebenenfalls gemischt mit weiteren farblosen Lacken - mit je 25 bis 80 Gramm, vorzugsweise je 55 Gramm, kristallinem Lapislazuli-Edelsteinpigment (11) mit einer Korngröße von 20-60 Mikrometer, vorzugsweise 20-40 Mikrometer, mit 1 bis 6 Gewichts-% kristallinem Pyrith (10), vorzugsweise 1-3 Gramm, insbesondere 2-3 Gramm, der Korngröße 30-150 Mikrometer, vorzugsweise 60-90 Mikrometer, mit einem farblosen Bindemittel (12) besteht.

11. Mischung (7) nach Anspruch 10, dadurch gekennzeichnet,
daß dieselbe aus je 100 Gramm eines farblosen Bindemittels (12) - nämlich selbsthärtendes oder reaktionshärtendes Lacksystem, insbesondere Polyester-, Polyurethan- oder Acryllack oder Autolack in Ein- oder Zweischichtlackierung, gegebenenfalls gemischt mit weiteren farblosen Lacken - mit je 25 bis 80 Gramm, vorzugsweise je 55 Gramm, kristallinem Lapislazuli-Edelsteinpigment mit einer Korngröße von 20-60 Mikrometer, vorzugsweise 20-40 Mikrometer, und mit je 1-6 Gramm eines pulverisierten Materials, vorzugsweise 1-3 Gramm, insbesondere 2-3 Gramm, welches Pyrith zu ersetzen imstande ist, wie Goldflitter, Goldpuder, Messing- oder Bronze- oder Aluminiumdioxydpulver, welches Material eine Korngröße von 10 bis 100 Mikrometer, vorzugsweise 60-90 Mikrometer, aufweist, besteht.

12. Träger (1,4,5) nach Anspruch 1 oder 5, dadurch gekennzeichnet,
daß derselbe mit einer Mischung (7) aus Lapislazuli-Edelsteinpigment, Pyrith und farblosem Bindemittel (12) beschichtet und der Auftrag getrocknet bzw. ausgehärtet und gegebenenfalls anschließend geschliffen bzw. poliert und mit einem farblosen Lack (8) überlackiert ist.

13. Träger nach Anspruch 12, dadurch gekennzeichnet,
daß derselbe aus Metall, Holz, Keramik, Kunststoff oder aus einer Folie (1), beispielsweise Polyesterfolie, besteht.

14. Träger nach Anspruch 13, dadurch gekennzeichnet,
daß die Oberfläche des Trägers oder der Träger in sich blau voreingefärbt ist.

## Claims

1. Process for the production of a coating by means of a mixture (7) of the semi-precious stone lapis lazuli on a substrate (1, 4, 5),
characterized in that
crystalline lapis lazuli semi-precious stone pigment (11) having a grain size between 5 and 90 micrometers (microns) is used and mixed with a colorless binder (12) - namely, a self-hardening or reaction-hardening coating system, especially polyester, polyurethane or acrylic coating or automotive paint in one-layer or two-layer coating, optionally mixed with additional colorless coatings - and this mixture (7) is applied onto the substrate (1, 4, 5) and is optionally ground or polished after the drying or hardening on the substrate (1, 4, 5).

2. Process according to Claim 1, characterized in that
the mixture (7) applied to the substrate (1, 4, 5) is ground or polished after the drying or hardening and is covered with a colorless coating lacquer (8).

3. Process according to Claim 1, characterized in that
the substrate (1, 4, 5) is roughened or sanded down before the application of the mixture (7), and the mixture (7) is sprayed or painted on.

4. Process according to Claim 1 or 2, characterized in that
the substrate (5) is covered with baking enamel (6) which is permanently applied, preferably baked on, and only then is the mixture (7) applied on the substrate (5), preferably sprayed or painted on.

5. Process for the production of a mixture (7) of the semi-precious stone lapis lazuli, characterized in that
crystalline lapis lazuli pigment (11) having a grain size between 20 and 60 micrometers, preferably between 20 and 40 micrometers, is mixed with 1% to 6% by weight of crystalline pyrite (10) having a grain size between 30 and 150 micrometers, preferably between 60 and 90 micrometers, as well as with a colorless binder (12) - namely, a self-hardening or reaction-hardening coating system, especially polyester, polyurethane or acrylic coating or automotive paint in one-layer or two-layer coating, optionally mixed with additional colorless coatings.

6. Process according to Claim 5, characterized in that
the mixture (7) of crystalline lapis lazuli pigment (11) having a grain size between 20 and 60 micrometers, preferably between 20 and 40 micrometers, is mixed with 1% to 6% by weight of crystalline pyrite (10) having a grain size between 30 and 150 micrometers, preferably between 60 and 90 micrometers, with a colorless binder (12) - namely, a self-hardening or reaction-hardening coating system, especially polyester, polyurethane or acrylic coating or automotive paint in one-layer or two-layer coating, optionally mixed with additional colorless coatings.

7. Process according to Claim 5 or 6, characterized in that
instead of pyrite, a pulverized material is used which is capable of replacing pyrite, namely, Dutch gold, gold powder, brass or bronze powder, aluminum dioxide powder, whereby the material has a grain size ranging from 10 to 100 micrometers, preferably 60 to 90 micrometers.

8. Process according to Claim 6, characterized in that
each 100 grams of a colorless binder (12) is mixed with 25 to 80 grams, preferably 55 grams, of crystalline lapis lazuli semi-precious stone pigment and with 1 to 6 grams, preferably 1 to 3 grams, especially 2 to 3 grams, of pyrite.

9. Process according to Claim 6, characterized in that
each 100 grams of a colorless binder (12) is mixed with 25 to 80 grams, preferably 55 grams, of crystalline lapis lazuli semi-precious stone pigment and with 1 to 6 grams, preferably 1 to 3 grams, especially 2 to 3 grams, of a pulverized material which is capable of replacing pyrite, such as Dutch gold, gold powder, brass or bronze powder, aluminum dioxide powder.

10. Mixture (7) ofthe semi-precious stone lapis lazuli for application on a substrate (1, 4, 5), characterized in that
said mixture consists of 100 grams of a colorless binder (12) - namely, a self-hardening or reaction-hardening coating system, especially polyester, polyurethane or acrylic coating or automotive paint in one-layer or two-layer coating, optionally mixed with additional colorless coatings - with 25 to 80 grams, preferably 55 grams, of crystalline lapis lazuli semi-precious stone pigment (11) having a grain size between 20 and 60 micrometers, preferably between 20 and 40 micrometers, with 1% to 6% by weight of crystalline pyrite (10), preferably 1 to 3 grams, especially 2 to 3 grams, having a grain size between 30 and 150 micrometers, preferably between 60 and 90 micrometers, as well as with a colorless binder (12).

11. Mixture (7) according to Claim 10, characterized in that
said mixture consists of 100 grams of a colorless binder (12) - namely, a self-hardening or reaction-hardening coating system, especially polyester, polyurethane or acrylic coating or automotive paint in one-layer or two-layer coating, optionally mixed with additional colorless coatings - with 25 to 80 grams, preferably 55 grams, of crystalline lapis lazuli semi-precious stone pigment (11) having a grain size between 20 and 60 micrometers, preferably between 20 and 40 micrometers, and with 1 to 6 grams, preferably 1 to 3 grams, especially 2 to 3 grams, of a pulverized material which is capable of replacing pyrite, namely, Dutch gold, gold powder, brass or bronze powder, aluminum dioxide powder, whereby the material has a grain size ranging from 10 to 100 micrometers, preferably 60 to 90 micrometers.

12. Substrate (1, 4, 5) according to Claim 1 or 5, characterized in that
said substrate is coated with a mixture (7) consisting of lapis lazuli semi-precious stone pigment, pyrite and colorless binder (12) and the coating is dried or hardened and optionally ground or polished and subsequently covered with a colorless lacquer (8).

13. Substrate according to Claim 12, characterized in that
said substrate is made of metal, wood, ceramic, plastic or of a film (1), for example, polyester film.

14. Substrate according to Claim 13, characterized in that
the surface of the substrate or substrates is/are pre-dyed blue throughout.

## Revendications

1. Procédé pour la réalisation d'un revêtement sur un substrat (1,4,5) au moyen d'un mélange (7) constitué de la pierre précieuse lapis-lazuli
caractérisé en ce que
du pigment cristallin de la pierre précieuse lapis-lazuli (11) présentant une granulométrie comprise entre 5 et 90 micromètres (microns) est mélangé avec un liant incolore (12) - à savoir un système de vernis autodurcissant ou à durcissement chimique, notamment du vernis à base de polyester, de polyuréthane ou du vernis acrylique, ou de la peinture automobile appliquée en une seule ou en deux couches, le cas échéant mélangé avec d'autres vernis incolores -, que ce mélange (7) est appliqué sur le substrat (1,4,5) et, le cas échéant, meulé ou poli sur le substrat après le séchage ou le durcissement.

2. Procédé selon la revendication 1, caractérisé en ce que, après le séchage, le mélange (7) appliqué sur le substrat (1,4,5) est meulé ou poli et revêtu d'un vernis incolore de finition (8).

3. Procédé selon la revendication 1, caractérisé en ce que, avant l'application du mélange (7), le substrat (1,4,5) est rendu rugueux ou est meulé et que le mélange (7) est appliqué au pistolet ou à la brosse.

4. Procédé selon la revendication 1 ou 2, caractérisé en ce que le substrat (5) est d'abord revêtu d'un vernis au four qui est appliqué de façon durable, de préférence par étuvage, et ensuite du mélange (7) lequel est appliqué de préférence au pistolet ou à la brosse.

5. Procédé pour la préparation d'un mélange (7) de la pièrre précieuse lapis-lazuli, caractérisé en ce que
du pigment cristallin de lapis-lazuli (11) présentant une granulométrie comprise entre 20 et 60 microns, de préférence entre 20 et 40 microns, est mélangé avec à 6 % en poids de pyrite cristalline (10) d'une granulométrie comprise entre 30 et 150 microns, de préférence entre 60 et 90 microns, et avec un liant incolore (12) - à savoir un système de vernis autodurcissant ou à durcissement chimique, notamment du vernis à base de polyester, de polyuréthanne ou du vernis acrylique, ou de la peinture automobile appliquée en une seule ou en deux couches, le cas échéant mélangé avec d'autres vernis incolores.

6. Procédé selon la revendication 5, caractérisé en ce que
le mélange (7) de pigment cristallin de lapis-lazuli (11) présentant une granulométrie comprise entre 20 et 60 microns, de préférence entre 20 et 40 microns, est mélangé avec 1 à 6 % en poids de pyrite cristalline (10) d'une granulométrie comprise entre 30 et 150 microns, de préférente entre 60 et 90 microns, et avec un liant incolore (12) - à savoir un système de vernis autodurcissant ou à durcissement chimique, notamment du vernis à base de polyester, de polyuréthanne ou du vernis acrylique, ou de la peinture automobile appliquée en une seule ou en deux couches, le cas échéant mélangé avec d'autres vernis incolores.

7. Procédé selon la revendication 5 ou 6, caractérisé en ce qu'on utilise, au lieu de la pyrite, une matière pulvérisée qui est en mesure de remplacer la pyrite, par exemple clinquant d'or, poudre d'or, poudre de laiton ou de bronze, poudre de dioxyde d'aluminium, ladite matière présentant une granulométrie comprise entre 20 et 100 microns, de préférence entre 60 et 90 microns.

8. Procédé selon la revendication 6, caractérisé en ce qu'on mélange 100 grammes de liant incolore (12) avec 25 à 80 grammes, de préférence 55 grammes de pigment cristallin de la pierre précieuse lapis-lazuli et avec 1 à 6 grammes de pyrite, de préférence 1 à 3 grammes, notamment 2 à 3 grammes.

9. Procédé selon la revendication 6, caractérisé en ce qu'on mélange 100 grammes de liant incolore (12) avec 25 à 80 grammes, de préférence 55 grammes de pigment cristallin de la pierre précieuse lapis-lazuli et avec 1 à 6 grammes, de préférence 1 à 3 grammes, notamment 2 à 3 grammes, de matière pulvérisée qui est en mesure de remplacer la pyrite, par exemple clinquant d'or, poudre d'or, poudre de laiton ou de bronze, poudre de dioxyde d'aluminium.

10. Mélange (7) de la pierre précieuse lapis-lazuli destiné à être appliqué sur un substrat (1,4,5), caractérisé en ce que ledit mélange est composé de 100 grammes de liant incolore (12) - à savoir un système de vernis autodurcissant ou à durcissement chimique, notamment du vernis à base de polyester, de polyuréthanne ou du vernis acrylique, ou de la peinture automobile appliquée en une seule ou en deux couches, le cas échéant mélangé avec d'autres vernis incolores, de 25 à 80 grammes, de préférence de 55 grammes de pigment cristallin de la pièrre précieuse lapis-lazuli (11) présentant une granulométrie comprise entre 20 et 60 microns, de préférence entre 20 et 40 microns et d'l à 6 grammes, de préférence d'1 à 3 grammes, notamment de 2 à 3 grammes de pyrite cristalline (10) présentant une granulométrie comprise entre 30 et 150 microns, de préférence entre 60 et 90 microns.

11. Mélange (7) selon la revendication 10, caractérisé en ce que ledit mélange est composé de 100 grammes de liant incolore (12) - à savoir un système de vernis autodurcissant ou à durcissement chimique, notamment du vernis à base de polyester, de polyuréthanne ou du vernis acrylique, ou de la peinture automobile appliquée en une seule ou en deux couches, le cas échéant mélangé avec d'autres vernis incolores -, de 25 à 80 grammes, de préférence de 55 grammes de pigment cristallin de la pierre précieuse lapis-lazuli présentant une granulométrie comprise entre 20 et 60 microns, de préférence entre 20 et 40 microns et d'1 à 6 grammes, de préférence d'1 à 3 grammes, notamment de 2 à 3 grammes de matière pulvérisée qui est en mesure de remplacer la pyrite, par exemple clinquant d'or, poudre d'or, poudre de laiton ou de bronze, poudre de dioxyde d'aluminium, présentant une granulométrie comprise entre 10 et 100 microns, de préférence entre 60 et 90 microns.

12. Substrat (1,4,5) selon la revendication 1 ou 5, caractérisé en ce que ledit substrat est revêtu d'un mélange (7) composé de pigment de la pièrre précieuse lapis-lazuli, de pyrite et de liant incolore (12), que ce revêtement est séché ou durci, puis meulé ou poli et ensuite revêtu d'un vernis incolore (8).

13. Substrat selon la revendication 12, caractérisé en ce que ledit substrat consiste en métal, en bois, encéramique, en matière plastique ou en une feuille (1), par exemple une feuille de polyester.

14. Substrat selon la revendication 13, caractérisé en ce que le substrat a été coloré en bleu au préalable à la surface ou dans la masse.
